## Europäisches Patentamt

(19) **European Patent Office**

**Office européen des brevets**

(11) Publication number: **0 116 192**
**B1**

(12) **EUROPEAN PATENT SPECIFICATION**

(45) Date of publication of patent specification: **16.09.87**

(21) Application number: **83300631.5**

(22) Date of filing: **08.02.83**

(51) Int. Cl.⁴: **G 05 D 27/02,** G 05 D 21/02, B 23 K 1/20 // H05K3/34

(54) **Flux control device.**

(43) Date of publication of application:
**22.08.84 Bulletin 84/34**

(45) Publication of the grant of the patent:
**16.09.87 Bulletin 87/38**

(84) Designated Contracting States:
**DE FR GB**

(56) References cited:
**WO-A-81/01380**
**FR-A-1 581 380**
**GB-A-1 076 530**
**US-A-2 460 518**
**US-A-3 376 883**

(73) Proprietor: **NIHON DENNETSU KEIKI CO., LTD.**
**27-1, Shimomaruki 2-chome**
**Ohta-ku Tokyo (JP)**

(72) Inventor: **Kondo, Kenshi**
**3-5, Ohkura 1-chome**
**Setagaya-ku Tokyo (JP)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

This invention relates generally to a fluxer for applying a liquid flux to printed circuit boards, and more particularly to a flux control device which is capable of maintaining the specific gravity and level of a liquid flux contained within a vessel in predetermined ranges.

Numerous techniques, both automatic and manual, have thus far been practiced for successively feeding printed circuit boards to a soldering zone to receive a soldering treatment therein. In such a case, it is the general practice to convey the printed circuit boards to a fluxing zone for applying a liquid flux to the soldering portions prior to the soldering treatment in order to obtain good soldering. As for the liquid flux, an undiluted or concentrated flux containing a resin as its major component is usually used after dilution into a predetermined concentration range with an alcohol or other suitable solvents. The liquid flux is contained in a vessel and applied to the lower side of a printed wiring board by an overflow, spray or other method. During the fluxing operation, it is desired to maintain the specific gravity and level of the liquid flux within the vessel in predetermined ranges since otherwise variations occur in its specific gravity and the level due to evaporation of the solvent and consumption of the flux.

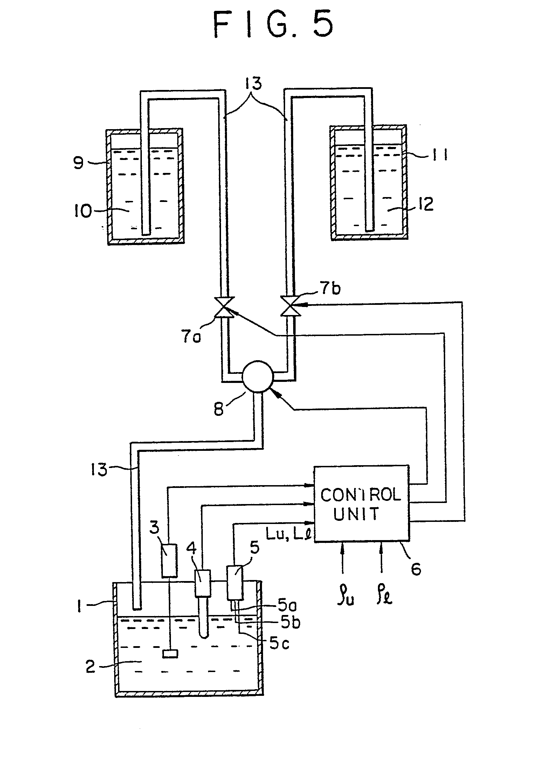

Fig. 5 illustrates a conventional flux control device, in which designated by the reference numeral 1 is a vessel for containing a liquid flux 2 to be applied to printed circuit boards, not shown. The vessel 1 is provided with a specific gravity detector 3, a temperature detector 4 and a liquid level detector 5 for measuring the specific gravity, temperature and surface level, respectively, of the liquid flux 2.

The level detector 5 has three electrodes 5a, 5b and 5c with their tips positioned at different vertical levels, detecting whether or not the surface level of the liquid flux transcends predetermined upper and lower limits $L_u$ and $L_l$ by electric conduction or non-conduction across electrodes 5a and 5c or across electrodes 5b adn 5c.

Indicated at 7a and 7b are solenoid valves, at 8 a pump, at 9 a reservoir for a concentrated flux 10, at 11 a reservoir for a diluent liquid 12, and at 13 a feed pipe means. A control unit 6 receives output signals from the specific gravity detector 3, temperature detector 4 and liquid level detector 5, monitoring whether or not the liquid flux is between predetermined upper and lower limits $\rho_u$ and $\rho_l$ of specific gravity and upper and lower limits $L_u$ and $L_l$ of liquid level, and, if not, producing instruction signals for actuating the solenoid valves 7a and 7b. More specifically, the input value of the specific gravity detector 3 is corrected to a value of a certain reference temperature on the basis of the input value from the temperature detector 4, and the corrected value is compared with the values of the preset upper and lower limits $\rho_u$ and $\rho_l$. When it is higher than the upper limit $\rho_u$, the control unit 6 produces an output for actuating the solenoid valve 7b and pump 8 to feed the diluent liquid 12 to the vessel 1. On the contrary, when it is lower than the lower limit $\rho_l$, the solenoid valve 7a and pump 8 are operated by the output of the control unit 6 to feed the concentrated flux 10 to the vessel 1.

Meanwhile, when the surface level of the liquid flux 2 in the vessel 1 reaches its predetermined lower limit, the level detector 5 produces an output of a lower limit value $L_l$ to feed the concentrated flux 10 or the diluent liquid 12 to the flux vessel 1 by alternately actuating the valves 7a and 7b along with the pump 8 until the liquid level reaches its predetermined upper limit while controlling the specific gravity within the predetermined range by the control unit 6.

However, the above-mentioned conventional device has a drawback in that due to the slow stop action of the pump 8 an instantaneous cut-off of the concentrated flux 10 or diluent liquid 12 is difficult even if the solenoid valves 7a and 7b are operated with a quick response. In addition, cleaning of the feed pipe of the undiluted flux is required every day at the end of operation since it is difficult to remove solidified flux from the pump 8.

In accordance with the present invention, there is provided a flux control device including a vessel for containing a liquid flux, a first reservoir for storing a concentrated flux, a second reservoir for storing a diluent, means for checking the specific gravity and surface level of the liquid flux in the vessel for any deviations from predetermined ranges, and means for selectively feeding the concentrated flux and diluent to the vessel from the first and second reservoirs in such a manner as to maintain the specific gravity and the surface level of the liquid flux in the vessel in the predetermined ranges, characterized in that said feeding means includes:

a source of pressurized gas;

first and second gas-liquid feed assemblies mounted on the first and second reservoirs, respectively, each feed assembly having an outer pipe, and an inner pipe defining a liquid passage therein and placed inside of the outer pipe to define a gas passage therebetween, said gas passage having one end thereof in open communication with the upper space within said respective reservoir and the other end in communication with said pressurized gas source and said liquid passage having one end thereof in communication with the liquid in said respective reservoir and the other end in communication with said vessel;

means for selectively communicating said gas passages of said first and second gas-liquid feed assemblies with said pressurized gas source so that the concentrated flux and the diluent may be fed to said vessel through respective liquid passages when said first and second reservoirs are selectively communicated with said pressurized gas source through respective gas passages; and

means to removably mount each of the first and second gas-liquid feed assemblies on each of the first and second reservoirs, wherein said mounting means comprises a first retaining element pivotally supported adjacent to an end portion of the outer pipe received within the reservoir, the retaining element being pivotable about an axis substantially orthogonal to the longitudinal axis of the outer pipe, and a clamping member threadedly engaging the exterior surface of the outer pipe and adjustably movable along the outer pipe to clamp the first retaining member against the reservoir wall.

One exemplary embodiment of flux control device in accordance with the present invention will now be described with reference to the accompanying drawings, in which:

Fig. 1 is a schematic representation of a flux control system according to the present invention;

Fig. 2 is a block diagram of a control unit;

Fig. 3 is an elevational view, partly in cross-section, schematically showing a gas-liquid feed assembly of Fig. 2;

Fig. 4 is a cross-section taken on line IV—IV in Fig. 3; and

Fig. 5 is a schematic representation of a conventional flux control system.

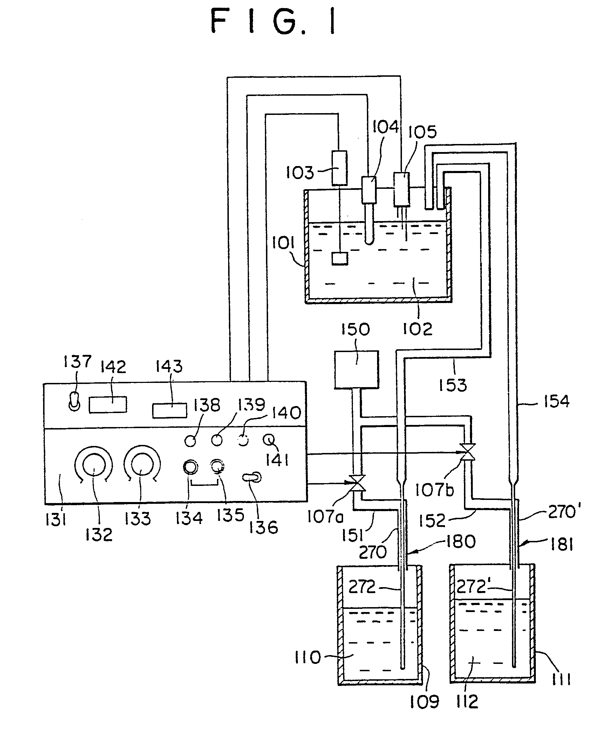

Referring first to Fig. 1, there is shown a flux control device according to the present invention, including a vessel 101 for containing a liquid flux 102, a specific gravity detector 103, a temperature detector 104, a liquid level detector 105, a first reservoir 109 for storing a concentrated flux 110, and a second reservoir 111 for storing a diluent liquid 112 of a specific gravity different from the concentrated flux. Mounted detachably on the first and second reservoirs 109 and 111 are first and second gas-liquid feed assemblies 180 and 181, respectively, for feeding, upon receipt of a gas pressure from a source of a pressurized gas 150, the concentrated flux 110 and diluent liquid 112 to the liquid flux vessel 101. The first gas-liquid feed assembly 180 is comprised of an outer pipe 270 and an inner pipe 272 placed inside of the outer pipe 270. Similarly, the second gas-liquid feed assembly 181 is comprised of outer and inner pipes 270' and 272'. The inner pipes 272 and 272' have their one ends extending to the bottoms of the first and second reservoir 109 and 111, respectively, the other ends of which are connected to conduits 153 and 154, respectively, opening into the liquid flux vessel 101. The outer pipes 270 and 270' have their one ends in open communication with the first and second reservoirs 109 and 111. Gas feed conduits 151 and 152 extend between the pressurized gas source 150 and the outer pipes 270 and 270', respectively and are provided with solenoid valves 107a and 107b, respectively. As a result, when the valve 107a or 107b is in the open state, the space over the liquid level in the reservoir 109 or 111 is pressurized, urging the concentrated flux 110 or diluent 112 to flow into the vessel 101 through the pipe 153 or 154.

Indicated at 131 is a front panel of a control unit 106 which will be described hereinafter, having a dial 132 for setting the upper limit of the specific gravity, a dial 133 for setting the lower limit of the specific gravity, push-button switches 134 and 135 to be manipulated for feeding the concentrated flux 110 and diluent 112, respectively, in manual operation, a selector switch 136 for selection of either manual or automatic operation, a selector switch 137 for selection of display of either specific gravity or temperature, and pilot lamps 138 to 141 of which the pilot lamp 138 is lit during feed of the concentrated flux 110, 139 is lit during feed of the diluent 112, 140 is lit during automatic operation and 141 is lit during manual operation. Designated at 142 is a display for specific gravity or temperature and at 143 an alarm.

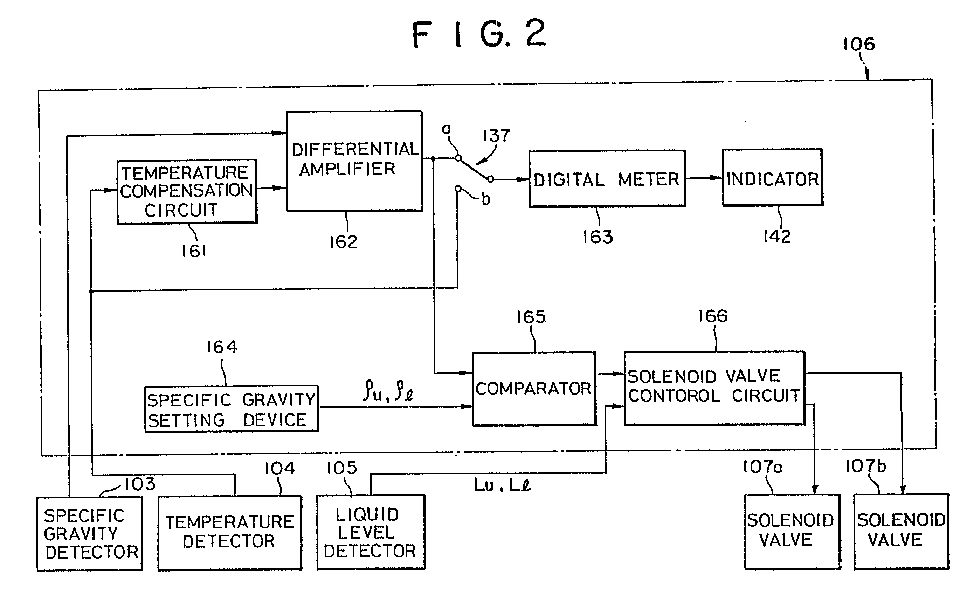

Fig. 2 is a block diagram illustrating major components of the control unit 106, including a temperature compensation circuit 161, a differential amplifier 162, a digital meter 163, a specific gravity setting device 164 operated by the dials 132 and 133, an upper and lower specific gravity limits comparator 165, and a solenoid valve control circuit 166.

The operation of the thus constructed flux control device will now be described first with regard to its automatic mode.

Referring again to Fig. 1, the selector switch 136 is turned to the automatic position, whereupon the pilot lamp 140 is lit to indicate that the system is in the automatic mode of operation. The temperature detector 104 produces an output signal indicative of the current temperature, which is fed to the temperature compensation circuit 161. If the detected temperature is higher than a given reference temperature level, for example, 20°C, the temperature correcting circuit 161 produces a negative differential output for compensation. If the detected signal is lower than 20°C, the temperature correcting circuit 161 produces a positive compensatory differential signal. The differential output is fed to the differential amplifier 162 which also receives an output from the specific gravity detector 103 for conversion to a value corresponding to the reference temperature. The output of the differential amplifier 162 is, if the selector switch 137 is closed on the side of contact $a$, fed to the digital meter 163 to display on the indicator 142 the converted value of specific gravity. When display of temperature is desired, the selector switch 137 is turned onto the contact $b$, whereupon the output of temperature detector 104 is fed to the digital meter 163 to display on the indicator 142 the current flux temperature.

The output of the differential amplifier 162 is simultaneously fed to the comparator 165 along with the preset values of upper and lower limits $p_u$ and $p_l$ thereby to compare the converted value of specific gravity with the preset values. In the event the converted value of specific gravity is outside the limit range, the comparator 165 produces an output thereby to actuate the solenoid valve 107a or 107b to feed the pressurized air from the compressed air source 150 to the concentrated flux reservoir 109 or the diluent liquid reservoir 111 through the conduit 151 or 152. Thus, concentrated flux 110 or the diluent liquid 112 is fed to the flux vessel 101 from the concentrated flux reservoir 109 or diluent reservoir 111 in proportion to the open time period of the valve 107a or 107b, until the specific gravity of the liquid flux 102 is in the predetermined range. However, should be liquid level detector 105 produces an output of $L_u$ indicative of the upper limit of the surface level of the liquid flux 102, the valve 107b or 107a is immediately closed.

If the liquid level detector 105 detects a drop of the surface level of the flux 102 below the lower limit and produces an output of $L_l$, the valves 107a and 107b are operated to alternately feed the concentrated flux 110 and the diluent liquid 112 to the flux vessel 101 until the output of upper limit $L_u$ appears while holding the specific gravity in the predetermined range. When the liquid level has not improved after a predetermined time length in spite of the operation of the valve 107a or 107b, the alarm 143 is actuated to warn of an abnormality, which may be exhaustion of the concentrated flux 110 or diluent liquid or clogging of the feed pipe 153 or 154. The circuit arrangement in this regard is known and thus omitted from illustration.

In manual operation, the pilot lamp 141 is lit upon turning the selector switch 136 to manual position to indicate that the control system is in manual mode of operation. Thereafter, the push button 134 or 135 is manipulated when necessary to feed the concentrated flux 110 or diluent liquid 112 to the flux vessel 101, for maintaining the displayed specific gravity on the indicator 142 between the upper and lower limits $\rho_u$ and $\rho_l$. If the liquid level drops below the lower limit, the alarm is actuated to produce a warning signal.

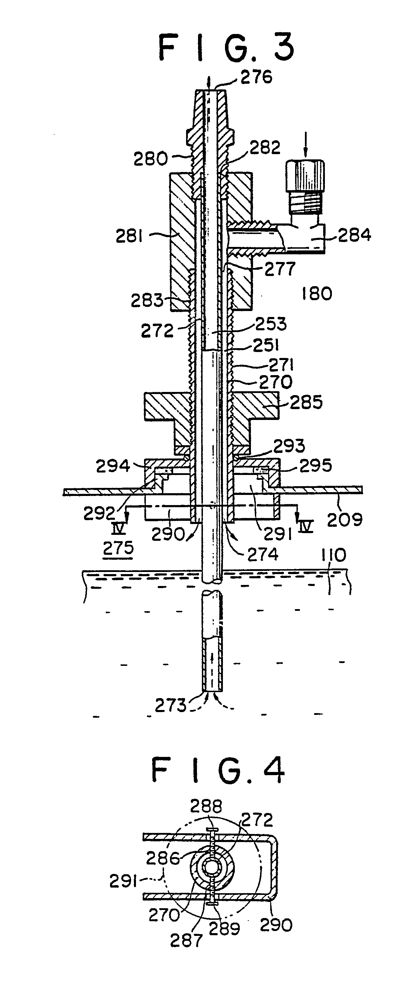

Fig. 3 illustrates in detail the gas-liquid feed assembly mounted, by way of example, on a concentrated flux reservoir 109. Of course, a similar gas-liquid feed assembly is provided for the diluent liquid reservoir 111. In Fig. 3, the outer pipe 270 is provided with an externally threaded portion 271 at the upper end thereof. The inner pipe 272 defining a liquid flow passage 253 therein is placed inside of the outer pipe 270 to define a gas flow passage, generally an annular passage 251, therebetween. The inner pipe 272 has a portion protruded out of the lower end 274 of the outer pipe 270 and terminating at the bottom of the reservoir 109 so that its end portion 273 serves as the inlet of the concentrated flux 110. On the other hand, the lower end 274 of the outer pipe 270 which serves as a gas inlet opens into the reservoir 209, communicating the annular gas passage 251 with the upper space 275 above the concentrated flux 110 in the reservoir 109. The upper end 276 of the inner pipe 272 is connected to the liquid conduit 153 opening into the flux vessel 101 (Fig. 1). The upper end 277 of the outer pipe 270 which serves as a gas intake port is connected to a pressurized gas source 150 through the valve 107a (Fig. 1). Therefore, when the valve 107a is in the open state, a gas pressure is applied to the upper space 275 of the tank 109 through the annular gas passage 251 as indicated by arrows of solid line. As a result, the liquid 110 in the reservoir 109 is fed to the liquid flux vessel 101 through the liquid passage 253 as indicated by arrows of broken line.

The liquid feed assembly is hermetically mounted on the reservoir tank and arranged to permit easy removal of clogging material as well as easy replacement of the inner pipe 272 in the event the liquid flow passage 253 is blocked.

The inner pipe 272 is provided with external screw threads 280 at its upper end for threaded engagement with internal screw threads 282 at the upper end of a connector 281 which has an internal screw 283 at its lower end for threaded engagement with the externally threaded portion 271 of the outer pipe 270. The connector 281 has an elbow 284 threaded through a center portion of its side wall to communicate the pressurized gas source with the annular gas passage 251. A presser member 285 is threaded on the externally threaded portion 271 of the outer pipe 270.

As shown in Fig. 4, the outer pipe 270 is provided with a pair of screw holes 286 and 287 in radially opposing positions at its lower end for receiving screws 288 and 289 which have the respective tip ends adapted to be abutted against the outer periphery of the inner pipe 272 to hold the inner pipe 272 in a predetermined spaced relation with the outer pipe 270. The screws 288 and 289 serve also as a support for rotatably connecting a U-shaped stopper 290 to the outer pipe 270. The stopper 290 has a pair of legs which are of a length longer than a lip 292 of a mouth 291 of the reservoir 109, but is able to be inserted into the mouth 291 by turning the stopper 290 about the screws 288 and 289. Indicated at 293 is an O-ring, at 294 a cap fitted on the lip 292, and at 295 a packing.

For assembling the foregoing component parts, the outer pipe 270 with the pressing member 285, the inner pipe 272 and the elbow 284 are successively threaded into the connector 281 in the first place. Thereafter, the O-ring 293, cap 294 and packing 295 are placed on the outer pipe 270 and the stopper 290 is attached thereto by the screws 288 and 289, simultaneously fixing the inner pipe 272 in position. The stopper 290 is then tilted and inserted into the reservoir 109 through the mouth 292, tightening the presser member 285 after positioning the packing 295, cap 294 and O-ring 293 as shown in Fig. 3. As a result, the stopper 290 comes into engagement with the top underside wall surface of the reservoir 109, hermetically sealing the outer peripheries of the outer pipe 270 and lip 292 of the tank 109 by the O-ring 293 and packing 295.

With the above-described gas-liquid feed assembly, it suffices to provide only one mouth or opening in the reservoir, in addition to the advantage that cleaning of the inner pipe is extremely easy.

## Claims

1. A flux control device including a vessel for containing a liquid flux, a first reservoir for storing a concentrated flux, a second reservoir for storing a diluent, means for checking the specific gravity and surface level of the liquid flux in the vessel for any deviations from predetermined ranges, and means for selectively feeding the concentrated flux and diluent to the vessel from the first and second reservoirs in such a manner as to maintain the specific gravity and the surface level of the liquid flux in the vessel in the predetermined ranges, characterized in that said feeding means includes:

a source of pressurized gas;

first and second gas-liquid feed assemblies mounted on the first and second reservoirs, respectively, each feed assembly having an outer pipe, and an inner pipe defining a liquid passage therein and placed inside of the outer pipe to define a gas passage therebetween, said gas passage having one end thereof in open communication with the upper space within said respective reservoir and the other end in communication with said pressurized gas source and said liquid passage having one end thereof in communication with the liquid in said respective reservoir and the other end in communication with said vessel;

means for selectively communicating said gas passages of said first and second gas-liquid feed assemblies with said pressurized gas source so that the concentrated flux and the diluent may be fed to said vessel through respective liquid passages when said first and second reservoirs are selectively communicated with said pressurized gas source through respective gas passages; and

means to removably mount each of the first and second gas-liquid feed assemblies on each of the first and second reservoirs, wherein said mounting means comprises a first retaining element pivotally supported adjacent to an end portion of the outer pipe received within the reservoir, the retaining element being pivotable about an axis substantially orthogonal to the longitudinal axis of the outer pipe, and a clamping member threadedly engaging the exterior surface of the outer pipe and adjustably movable along the outer pipe to clamp the first retaining member against the reservoir wall.

2. The flux control device as defined in Claim 1, wherein said mounting means further comprises a second retaining element disposed between the first retaining element and the clamping member and slidable along the outer pipe to close the reservoir opening receiving the gas-liquid feed assembly.

3. The flux control device as defined in Claim 1, wherein the first retaining element is of a U-shape with the legs of the retaining element extending on opposite sides of the outer pipe.

4. The flux control device as defined in Claim 3, including a threaded fastener extending through an opening in each leg of the U-shaped retaining element and being received within a threaded opening in the outer pipe, the first retaining element pivotally movable about the fasteners.

5. The flux control device as defined in Claim 4, wherein the fasteners extend through the outer pipe and contact the inner pipe to adjustably position the inner pipe within the outer pipe.

## Patentansprüche

1. Regeleinrichtung für Flußmittel mit einem Behälter für ein flüssiges Flußmittel, einem ersten Speicher für ein konzentriertes Flußmittel, einem zweiten Speicher für ein Verdünnungsmittel, einer Einrichtung zum Prüfen des spezifischen Gewichtes und des Füllstandes des flüssigen Flußmittels im Behälter nach Abweichungen von vorbestimmten Bereichen, und einer Vorrichtung zum selektiven Einbringen des Flußmittelkonzentrats und des Verdünnungsmittels aus dem ersten und zweiten Speicher in den Behälter, so daß das spezifische Gewicht und der Füllstand des flüssigen Flußmittels innerhalb der vorgegebenen Bereiche bleiben, dadurch gekennzeichnet, daß die Einfüllvorrichtung folgendes umfaßt:

einen Vorrat von unter Druck stehenden Gas;

erste und zweite Einheiten zum Zuführen der Gas-Flüssigkeit, welche jeweils auf dem ersten beziehungsweise zweiten Speicher angeordnet sind, mit jeweils einem äußeren Rohr, und einem inneren Rohr als Durchgang für die Flüssigkeit, welches im äußeren Rohr angeordnet ist, um dazwischen einen Durchgang für das Gas zu bilden; wobei ein Ende des Gasdurchganges in offener Verbindung mit dem oberen Raum des jeweiligen Speichers und das andere Ende mit dem Vorrat von unter Druck stehenden Gas, und daß ein Ende des Flüssigkeitsdurchganges mit der Flüssigkeit in dem jeweiligen Speicher und das andere Ende mit dem Behälter in Verbindung steht;

eine Einrichtung zum selektiven Verbinden der Gasdurchgänge der ersten und zweiten Einheit zum Zuführen der Gas-Flüssigkeit mit dem Vorrat von unter Druck stehenden Gas, um das Flußmittelkonzentrat und das Verdünnungsmittel über entsprechende Flüssigkeitsdurchgänge dem Behälter zuzuführen, wenn der erste und zweite Speicher jeweils durch die entsprechenden Gasleitungen mit dem Vorrat von unter Druck stehenden Gas selektiv verbunden sind; und

eine lösbare Befestigungsvorrichtung, um sowohl die erste als auch die zweite Einheit zum Zuführen der Gas-Flüssigkeit auf jedem der ersten und zweiten Speicher anzubringen, wobei die Befestigungsvorrichtung aus einer ersten Haltevorrichtung besteht, welche drehbar am Endteil des äußeren sich im Speicher befindlichen Rohrs befestigt ist, und diese Haltevorrichtung um eine Achse drehbar ist, die im wesentlichen orthogonal zu der Längsachse des äußeren Rohres verläuft, und ein Klemmelement, welches durch Schrauben in die äußere Oberfläche des äußeren Rohres eingreift und entlang des äußeren Rohres beweglich einstellbar ist, um die erste Haltevorrichtung gegen die Speicherwand zu klemmen.

2. Regelvorrichtung gemäß Anspruch 1, dadurch gekennzeichnet, daß die Haltevorrichtung außerdem eine zweite Haltevorrichtung aufweist, welche zwischen der ersten Haltevorrichtung und dem Klemmelement angeordnet ist und sich entlang des äußeren Rohres verschieben läßt, um die Speicheröffnung, in der sich die Einheit zum Zuführen der Gas-Flüssigkeit befindet, abzuschließen.

3. Regeleinrichtung gemäß Anspruch 1, dadurch gekennzeichnet, daß die erste Haltevorrichtung U-förmig ist und sich die Schenkel der Haltevorrichtung an gegenüberliegenden Seiten des äußeren Rohres erstrecken.

4. Regeleinrichtung gemäß Anspruch 3, dadurch gekennzeichnet, daß eine geschraubte Befestigungsvorrichtung vorgesehen ist, die sich durch eine Öffnung in jedem Schenkel der U-förmigen Haltevorrichtung erstreckt und in einer mit Gewindebohrung versehenen Öffnung in dem äußeren Rohr aufgenommen wird, wobei die erste Haltevorrichtung um die Befestigungsvorrichtung angeordnet ist.

5. Regeleinrichtung gemäß Anspruch 4, dadurch gekennzeichnet, daß sich die Befestigungsvorrichtungen durch das äußere Rohr in Berührung mit dem inneren Rohr erstrecken, um das innere Rohr innerhalb des äußeren Rohres einzurichten.

**Revendications**

1. Dispositif de commande et de réglage de caractéristiques d'un flux, comprenant un récipient destiné à contenir un flux liquide, un premier réservoir destiné à stocker un flux concentré, un second réservoir destiné à stocker un diluant, des moyens de vérification de la densité et du niveau de la surface du flux liquide dans le récipient pour signaler tous les écarts éventuels par rapport à des intervalles prédéterminés et un moyen pour envoyer sélectivement le flux concentré et le diluant alimenter le récipient à partir des premier et second réservoirs, de manière à maintenir dans les intervalles prédéterminés la densité et le niveau de la surface du flux liquide dans le récipient, dispositif caractérisé en ce que ledit moyen d'alimentation comprend:
une source de gaz sous pression;
des premier et second ensembles d'alimentation en gaz-liquide, montés respectivement sur les premier et second réservoirs, chaque ensemble d'alimentation comportant un tuyau extérieur et un tuyau intérieur délimitant un passage pour le liquide et placé à l'intérieur du tuyau extérieur pour délimiter entre eux un passage pour le gaz, ledit passage pour gaz ayant une de ses extrémités en communication ouverte avec l'espace supérieur situé à l'intérieur dudit réservoir respectif et son autre extrémité en communication avec ladite source de gaz sous pression, et ledit passage pour liquide ayant une de ses extrémités en communication avec le liquide dudit réservoir respectif et son autre extrémité en communication avec ledit récipient;
un moyen de communication sélective entre lesdits passages pour gaz des premier et second ensembles d'alimentation en gaz-liquide et la source de gaz sous pression, de sorte que le flux concentré et le diluant puissent être envoyés dans ledit récipient par lesdits passages pour liquide respectifs quand lesdits premier et second réservoirs sont mis respectivement en communication avec ladite source de gaz sous pression par les passages pour gaz respectifs, et
un moyen pour monter de façon amovible chacun des premier et le second ensembles d'alimentation en gaz-liquide sur chacun des premier et second réservoirs, ledit moyen de montage comprenant un premier élément de maintien monté de façon pivotante à proximité d'une extrémité du tuyau extérieur que reçoit le réservoir, l'élément de maintien pouvant pivoter sur un axe sensiblement perpendiculaire à l'axe longitudinal du tuyau extérieur et un organe de blocage en prise par un filetage avec la surface extérieure du tuyau extérieur, et pouvant être déplacé de façon réglage le long du tuyau extérieur pour bloquer le premier élément de maintien contre la paroi du réservoir.

2. Dispositif de commande et de réglage des caractéristiques d'un flux selon la revendication 1, dans lequel ledit moyen de montage comprend en outre un second élément de maintien disposé entre le premier élément de maintien et l'organe de blocage, et pouvant coulisser le long du tuyau extérieur pour fermer l'ouverture du réservoir qui reçoit l'ensemble d'alimentation en gaz-liquide.

3. Dispositif de commande et de réglage de caractéristiques d'un flux selon la revendication 1, dans lequel le premier élément de maintien est en forme de U, ses branches s'étendant sur des côtés opposés du tuyau extérieur.

4. Dispositif de commande et de réglage de caractéristiques d'un flux selon la revendication 3, comprenant un élément fileté de fixation, qui traverse une ouverture située dans chaque branche de l'élément de maintien en forme de U et qui est reçu à l'intérieur d'une ouverture filetée pratiquée dans le tuyau extérieur, le premier élément de maintien pouvant pivoter autour des éléments de fixation.

5. Dispositif de commande de réglage de caractéristiques d'un flux selon la revendication 4, dans lequel les éléments de fixation traversent le tuyau extérieur et entrent en contact avec le tuyau intérieur pour permettre le positionnement réglable du tuyau intérieur à l'intérieur du tuyau extérieur.

# F I G. I

# F I G. 2

0 116 192

F I G. 3

F I G. 4

# F I G. 5

CONTROL
UNIT